# FASCICULE DE BREVET EUROPEEN

(11) **EP 3 899 351 B1**
(45) Date de publication et mention de la délivrance du brevet: **30.11.2022**
(21) Numéro de dépôt: 19848975.9
(22) Date de dépôt: 20.12.2019
(51) Int. Cl.: F17D 1/04

(54) **POSTE DE DÉTENTE D'UN GAZ ET DE COMPRESSION D'UN FLUIDE**
GASEXPANSIONS- UND FLUIDVERDICHTUNGSSTATION
GAS EXPANSION AND FLUID COMPRESSION STATION

(30) Priorité: 21.12.2018 FR 1873933
(43) Date de publication de la demande: 27.10.2021
(73) Titulaire: GRTgaz, 92270 Bois-Colombes (FR)
(72) Inventeur: ONFROY, Yannick, 92270 BOIS COLOMBES (FR); SESMAT, Alban, 92270 BOIS COLOMBES (FR)
(74) Mandataire: Cornuejols, Marine Sophie
(86) Numéro de dépôt international: PCT/FR2019/053266
(87) Numéro de publication internationale: WO 2020/128400

(56) Documents cités:
- WO-A1-2007/087713
- CA-A1- 2 552 366
- GB-A- 2 103 354
- US-A- 4 522 636
- US-A1- 2018 073 802

## Description

### DOMAINE TECHNIQUE DE L'INVENTION

La présente invention vise un poste de détente d'un gaz et de compression d'un fluide par récupération d'énergie mécanique de détente. Elle s'applique, notamment, aux postes de détente de gaz situés à distance d'un réseau électrique.

### ÉTAT DE LA TECHNIQUE

La détente d'un gaz entraîne l'apparition d'une énergie fatale (énergie de détente) aujourd'hui peu ou mal valorisée et donc majoritairement ou totalement perdue.

La détente d'un gaz depuis un réseau amont, telle une infrastructure de transport, vers un réseau aval, tel un réseau de distribution, a lieu dans un poste de détente situé à la frontière entre les réseaux aval et amont. Certains postes de détente se situent dans des lieux où l'alimentation électrique est intermittente ou absente. Il découle de cette contrainte une conception essentiellement mécanique des postes de détente situés dans ces lieux. Or, des modèles plus perfectionnés nécessitent de l'énergie électrique pour mettre en fonctionnement certains éléments (écrans, capteurs, transmetteurs, vannes). D'autre part, le gaz détendu présente généralement une température trop basse pour que ce gaz soit injecté dans le réseau aval et un échange thermique doit alors avoir lieu pour que le gaz soit mis en condition d'injection.

On connaît des postes de détente pour lesquels la chaleur de l'énergie de détente est utilisée pour générer de l'électricité grâce à un générateur couplé à la turbine de détente. Cette électricité est alors utilisée pour alimenter un échangeur de chaleur pour réchauffer le gaz détendu.

De même, il existe des postes dans lesquels le gaz détendu est ensuite réchauffé par combustion d'une partie du gaz, pour réchauffer la partie restante, avant son injection dans le réseau aval.

Il existe également la possibilité de générer du courant électrique en utilisant un moteur à gaz prélevé sur le réseau aval ou amont.

Toutefois, les solutions existantes permettent de récupérer l'énergie fatale mais aucune ne permet de stocker cette énergie pour l'employer au moment opportun. En outre, le réchauffage du gaz détendu nécessite des moyens importants peu compatibles avec la taille des postes ou leur coût.

On connaît les document US 2018/073802 et WO 2007/087713, qui décrivent des méthodes pour stocker de l'énergie sous forme d'air liquide ou de gaz liquide, respectivement. Du fait de cet objectif, ces méthodes sont très complexes, donc onéreuses à mettre en œuvre et ne peuvent être mises en œuvre que sur des interface entre un réseau de gaz à haute pression et un réseau de gaz à basse pression dont les débits sont importants. Par exemple, la méthode décrite dans le document US 2018/073802 impose la mise en œuvre de cinq compresseurs et sept détendeurs. De plus, les générateurs et moteurs électriques imposent des pertes de rendement importantes. Ces méthodes ne permettent pas une autonomie électrique de postes de détente.

### EXPOSÉ DE L'INVENTION

La présente invention vise à remédier à tout ou partie de ces inconvénients.

À cet effet, la présente invention vise un poste de détente d'un flux d'un gaz, présentant en entrée une température Tₐ et une pression Pₐ, qui comporte :
- un détendeur à récupération d'énergie mécanique configuré pour abaisser la pression du flux de gaz à une pression P_{b} et à une température T_{b} telles que P_{b} < Pₐ et Tb < Ta,
- un compresseur (110) d'un flux d'un fluide, présentant en entrée une température T_{c} et une pression P_{c}, le détendeur et le compresseur étant mécaniquement associés pour que le mouvement du détendeur lors de la détente du gaz entraîne l'actionnement du compresseur de sorte que le fluide soit comprimé à une pression P_{d} et à une température T_{d} telles que P_{d} > P_{c} et T_{d} > T_{c} et
- un échangeur de chaleur entre le flux de gaz en sortie ou en entrée du détendeur et le flux du fluide en sortie ou en entrée du compresseur pour réchauffer le gaz et pour refroidir le fluide.

Grâce à ces dispositions, l'énergie de détente est stockée sous forme de gaz comprimé dans le réservoir, permettant une valorisation ultérieure de cette énergie tout en, simultanément, réchauffant le flux de gaz, permettant son injection sur un réseau aval sans apport d'énergie extérieure.

Dans des modes de réalisation, le poste de détente objet de l'invention comporte un arbre commun entre un détendeur et un compresseur.

Grâce à ces dispositions, l'entraînement du compresseur par le détendeur se fait avec des pertes mécaniques très limitées, ce qui augmente le rendement du poste de détente.

Dans des modes de réalisation, le poste de détente objet de l'invention comporte un piston libre mis en déplacement dans une chambre de détente par le gaz et compressant le fluide dans une chambre de compression.

Grâce à des dispositions, la pression du fluide en sortie du compresseur peut être plus élevée que la pression du gaz en entrée du poste de détente.

Dans des modes de réalisation, le poste de détente objet de l'invention comporte un générateur relié à une sortie de l'échangeur de chaleur, le générateur étant configuré pour générer de l'électricité électrique à partir de fluide comprimé.

Dans des modes de réalisation, le poste de détente objet de l'invention comporte un moyen de stockage d'énergie électrique généré par le générateur, ce moyen de stockage alimentant en énergie électrique au moins un élément dudit poste de détente.

Ces modes de réalisation permettent de transformer l'énergie stockée sous forme de gaz stocké en énergie électrique, pour alimenter le poste de détente ou un autre équipement relié électriquement au générateur.

Dans des modes de réalisation, le poste de détente objet de l'invention comporte un échangeur thermique entre un flux de fluide sortant d'un compresseur et un flux de gaz fourni audit poste en amont d'un détendeur.

Dans des modes de réalisation, le fluide en sortie du générateur est fourni en entrée du compresseur.

Ces modes de réalisation permettent de réaliser un cycle du fluide, le fluide pouvant être choisi pour sa capacité à stocker de manière optimale l'énergie de détente.

Dans des modes de réalisation, le poste de détente objet de l'invention comporte un réservoir de stockage du fluide en sortie de l'échangeur de chaleur.

Dans des modes de réalisation, le fluide est de l'air.

Ces modes de réalisation permettent une conception simple du poste de détente.

Dans des modes de réalisation, l'échangeur de chaleur est configuré pour être au moins partiellement enterré dans un sol.

Ces modes de réalisation permettent d'optimiser le fonctionnement de l'échangeur de chaleur en termes de capacité à réchauffer le gaz et à refroidir le fluide.

Dans des modes de réalisation, le poste objet de l'invention comporte une pluralité de couples comportant, chacun, un détendeur à récupération d'énergie mécanique et un compresseur mécaniquement associés pour que le mouvement d'un détendeur lors de la détente du gaz entraîne l'actionnement du compresseur.

Ces modes de réalisation augmentent la performance de la détente/compression.

Dans des modes de réalisation, l'échangeur de chaleur est positionné entre deux étages de détendeurs et/ou de compresseurs.

Ces modes de réalisation permettent de réaliser un échange de chaleur intermédiaire.

Dans des modes de réalisation, le poste de détente objet de l'invention comporte un échangeur thermique entre un flux de fluide issu d'un compresseur et un flux de gaz fourni audit poste.

### BRÈVE DESCRIPTION DES FIGURES

D'autres avantages, buts et caractéristiques particulières de l'invention ressortiront de la description non limitative qui suit d'au moins un mode de réalisation particulier du poste de détente objet de la présente invention, en regard des dessins annexés, dans lesquels :
- la figure 1 représente, schématiquement, un premier mode de réalisation particulier du poste de détente objet de l'invention,
- la figure 2 représente, schématiquement, un deuxième mode de réalisation particulier du poste de détente objet de l'invention,
- la figure 3 représente, schématiquement, un troisième mode de réalisation particulier du poste de détente objet de l'invention et
- la figure 4 représente, schématiquement, un couplage mécanique d'un détendeur et d'un compresseur par piston libre.

### DESCRIPTION DES MODES DE RÉALISATION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

On note que le terme « gaz » fait référence, par exemple, à du méthane.

On note que le terme « réseau amont » désigne, par exemple, un réseau de transport de gaz.

On note que le terme « réseau aval » désigne, par exemple, un réseau de distribution de gaz.

On note que le terme de « fluide » fait référence, par exemple, à de l'air.

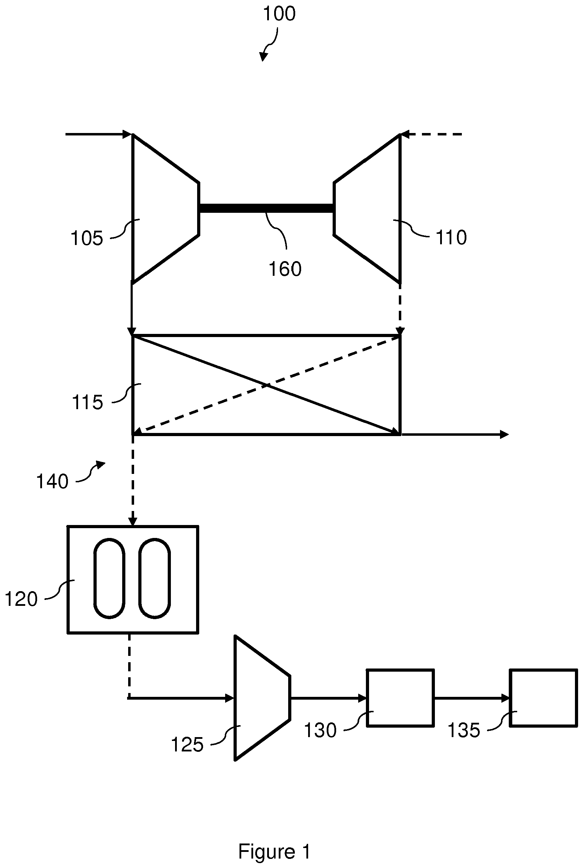

Dans les figures 1 à 3, le chemin suivi par le fluide est en traits discontinus alors que le chemin suivi par le gaz est en traits continus.

On observe, sur la figure 1, qui n'est pas à l'échelle, une vue schématique d'un mode de réalisation du poste de détente 100 objet de l'invention. Ce poste de détente 100 d'un flux d'un gaz, présentant en entrée une température Tₐ et une pression Pₐ, comporte :
- Un détendeur à récupération d'énergie mécanique 105 configuré pour abaisser la pression du flux de gaz à une pression P_{b} et à une température T_{b} telles que P_{b} < Pₐ et T_{b} < Tₐ,
- un compresseur 110 d'un flux d'un fluide, présentant en entrée une température T_{c} et une pression P_{c}, entraîné par l'actionnement du détendeur et configuré pour augmenter la pression du flux du fluide à une pression P_{d} et à une température T_{d} telles que P_{d} > P_{c} et T_{d} > T_{c} et
- un échangeur 115 de chaleur entre le flux de gaz en sortie ou en entrée du détendeur et le flux du fluide en sortie ou en entrée du compresseur pour réchauffer le gaz et pour refroidir le fluide.

Le détendeur 105 est, par exemple, une turbine de détente de gaz de tout type connu de l'homme du métier dans le contexte de la détente d'un gaz entre une réseau amont et un réseau aval de gaz. Le choix d'implémentation du détendeur 105 dépend ainsi de la valeur de pression en entrée du gaz Pₐ et de la valeur de pression en sortie du gaz P_{b}. Typiquement, la pression en entrée du gaz Pₐ est de l'ordre 60 bar et de la valeur de pression en sortie du gaz P_{b} est de l'ordre de 20 bar.

Par exemple, le détendeur peut être une turbine 105 de type axiale multi-étagée.

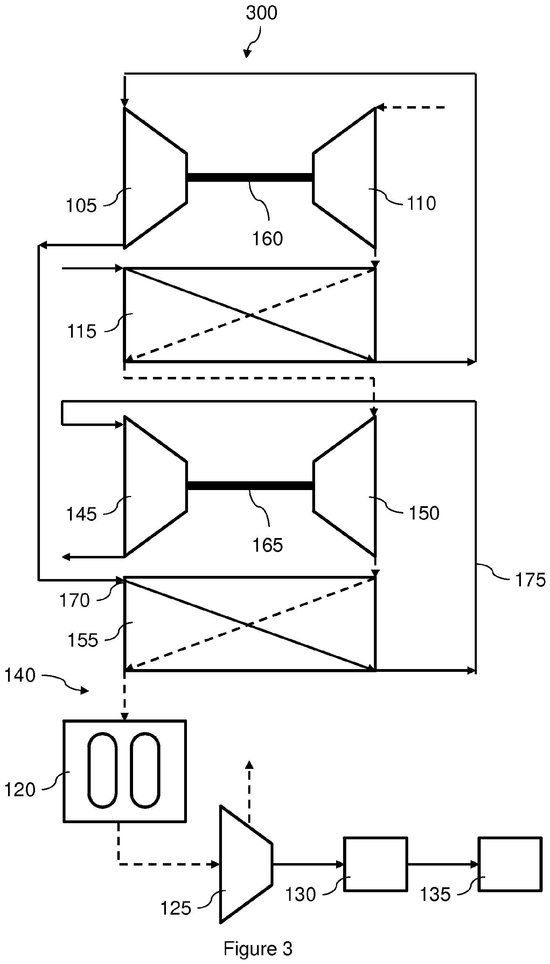

Dans des variantes, telles que celle représentée en figure 3, le poste 300 comporte une pluralité de détendeurs à récupération d'énergie mécanique 105 successifs.

Le compresseur 110 est un compresseur de fluide sous forme gazeuse de tout type connu de l'homme du métier dans le contexte du transfert d'une énergie mécanique en énergie gazeuse. Le choix d'implémentation du compresseur 110 dépend ainsi de la valeur de pression en entrée du fluide P_{c} et de la valeur de pression en sortie du fluide P_{d}.

Ce compresseur 110 est, par exemple, un compresseur volumétrique, par exemple à piston ou à membrane, éventuellement multi-étagé. Le compresseur 110 est, par exemple, configuré pour, en entrée, recevoir de l'air à pression atmosphérique et, en sortie, fournir de l'air comprimé selon une pression comprise entre 100 et 200 bar.

Dans des variantes, le compresseur 110 est remplacé par tout autre moyen de compression d'un gaz connu.

Le détendeur 105 à récupération d'énergie mécanique et le compresseur 110 sont mécaniquement associés pour que le mouvement du détendeur 105 lors de la détente du gaz entraîne l'actionnement du compresseur 110 de sorte que le fluide soit comprimé. Par exemple, un arbre commun 160 est solidarisé au détendeur 105 et mis en translation ou en rotation sur lui-même lors du mouvement du détendeur 105. Cet arbre 160 est également solidarisé au compresseur 110 de sorte que le mouvement de l'arbre 160 entraîne le fonctionnement du compresseur 110 et donc la compression du fluide.

Le détendeur 145 à récupération d'énergie mécanique et le compresseur 150 sont mécaniquement associés pour que le mouvement du détendeur 145 lors de la détente du gaz entraîne l'actionnement du compresseur 150 de sorte que le fluide soit comprimé. Par exemple, un arbre commun 165 est solidarisé au détendeur 145, cet arbre étant mis en translation ou en rotation sur lui-même lors du mouvement du détendeur 145. Cet arbre 165 est également solidarisé au compresseur 150 de sorte que le mouvement de l'arbre 165 entraîne le fonctionnement du compresseur 150 et donc la compression du fluide.

Grâce à ces liaisons mécaniques, l'entraînement des compresseurs 110 et 150 par les détendeurs 105 et 145 se fait avec des pertes mécaniques très limitées, ce qui augmente le rendement du poste de détente.

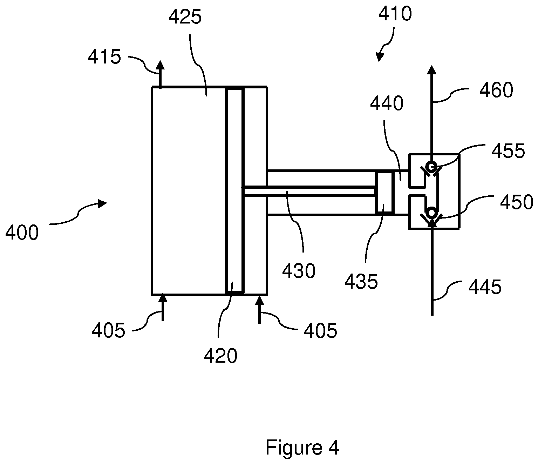

La figure 4 représente un couple détendeur 400, à gauche, et compresseur 410, à droite, à piston libre. Le détendeur 400 comporte une chambre de détente 425 munie d'au moins une entrée de gaz à haute pression 405 et une sortie de gaz à basse pression 415. Dans la chambre de détente 425, un piston de détente 420 est mis en mouvement de va et vient par la pression du gaz injectée alternativement de part et d'autre du piston 420 par l'intermédiaire des entrées 405. La force résultant de l'application de cette pression sur le piston de détente est transmise, par l'intermédiaire d'un arbre 430, à un piston de compression 435 qui comprime le fluide dans une chambre de compression 440. L'ensemble des pistons 420 et 435 et de l'arbre 430 constitue un piston libre.

Des valves 450 et 455 assurent l'étanchéité et le sens de déplacement du fluide depuis une entrée de fluide à basse pression 445 jusqu'à une sortie de fluide à haute pression 460. Le système de commande de l'entrée de gaz dans la chambre de détente 425 et de sortie de gaz de la chambre 425, n'est pas décrit ici, étant bien connu de l'homme du métier.

Ainsi, un piston libre est mis en déplacement par le gaz, dans la chambre de détente 425, et compresse le fluide dans la chambre de compression 440. L'entraînement du compresseur par le détendeur se fait avec des pertes mécaniques très limitées, ce qui augmente le rendement du poste de détente. On note que la pression du fluide en sortie du compresseur peut être plus élevée que la pression du gaz en entrée du poste de détente, en fonction du ratio des surfaces des pistons 420 et 435.

En variante, le piston libre est remplacé par des membranes, comme dans les surpresseurs à membranes de type connu.

Dans des variantes, le poste 100 comporte une boite de vitesses entre le détendeur, notamment si le détendeur est une turbine 105 et le compresseur 110 de sorte à permettre des vitesses de rotation et des couples différents entre le détendeur 105 et le compresseur 110.

L'échangeur 115 de chaleur est, par exemple, un échangeur tubulaire ou à ailettes. Dans des variantes, l'échangeur 115 peut comporter un circuit caloporteur intermédiaire.

Au sein de l'échangeur 115 de chaleur, le rapport des pressions P_{b} et P_{d} demeure inchangé tandis que la température T_{b} augmente et que la température T_{d} baisse. L'échangeur 115 est configuré pour qu'en sortie, la température du gaz soit compatible avec une plage de valeurs de température acceptée par le réseau aval. Par exemple, le gaz en sortie de l'échangeur 115 est grossièrement à température ambiante. Typiquement, la valeur de température en entrée Tₐ est de l'ordre de 5 °C et la température en sortie de l'échangeur 115 est de l'ordre de 10°C ou 20°C.

Le fluide en sortie de l'échangeur 115 de chaleur peut être relâché dans l'environnement autour du poste 100 de détente.

Ce fluide peut également être stocké dans un réservoir 120 de stockage du fluide comprimé refroidi dans l'échangeur 115 de chaleur.

Ce fluide peut également être fourni directement à un générateur 125 d'énergie électrique, éventuellement après stockage dans un réservoir de fluide comprimé 120.

Ce fluide peut également être injecté sur un réseau d'air comprimé.

Le réservoir 120 est, par exemple, une bombonne configurée pour stocker le fluide selon une pression déterminée. Dans des variantes, le réservoir 120 est formé de plusieurs bombonnes.

Dans des variantes, le réservoir 120 est configuré pour être relié à un réseau de gaz comprimé. Dans d'autres variantes, le poste 100 ne comporte pas de réservoir et le gaz comprimé est injecté directement sur un réseau de gaz.

L'échange thermique peut se faire via un circuit caloporteur intermédiaire et un échangeur peut être ajouté pour refroidir le fluide caloporteur du compresseur et réchauffer le gaz naturel. Par exemple, ce fluide caloporteur est de l'huile.

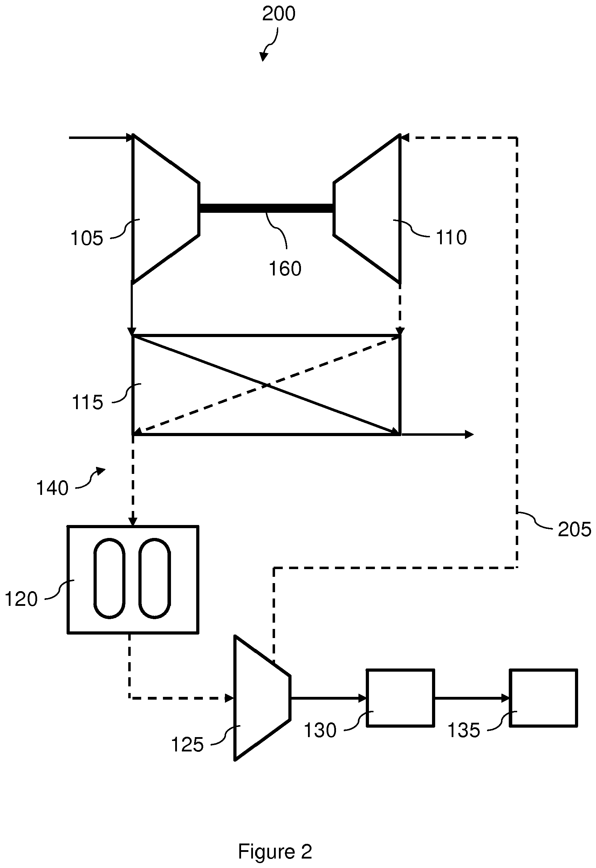

Dans des modes de réalisation, tels que ceux représentés en figures 1 et 2, le poste, 100 ou 200, comporte un générateur 125 configuré pour générer de l'électricité électrique à partir du fluide comprimé en sortie 140 de l'échangeur 115 de chaleur.

En variante, un générateur est positionné en sortie d'un compresseur et en amont de l'échangeur de chaleur.

Dans des variantes, le générateur 125 est configuré pour générer de l'électricité à partir du fluide stocké dans un réservoir 120.

Dans des modes de réalisation, un échangeur de chaleur en sortie du générateur transfert les frigories issues de la turbine 125 pour alimenter un réseau de froid ou pour refroidir un datacenter (centre de données).

On note que le fluide, dans le mode de réalisation décrit en figure 2, peut être de l'air mais aussi, puisqu'il circule en circuit fermé, tout fluide choisi pour sa capacité à stocker de manière optimale l'énergie de détente.

Le générateur 125 est, par exemple, un générateur d'électricité à partir de gaz comprimé fonctionnant par l'actionnement d'une turbine par le flux de gaz relâché par le réservoir 120. Ce générateur 125 peut être, par exemple, de type asynchrone triphasé.

Dans des modes de réalisation, tels que ceux représentés en figures 1 et 2, le poste, 100 ou 200, comporte un moyen 130 de stockage d'énergie électrique généré par le générateur.

Le moyen 130 de stockage d'énergie est, par exemple, une batterie.

Dans des modes de réalisation, tels que ceux représentés en figures 1 et 2, le poste, 100 ou 200, l'électricité alimente au moins un élément 135 dudit poste de détente.

L'élément 135 peut être de toute nature pourvu qu'il requière une alimentation électrique. Cet élément 135 est, par exemple, un écran, un capteur, un actionneur, un détecteur. Par exemple, cet élément 135 est une vanne ou un moteur.

Dans des variantes, l'électricité alimente un équipement extérieur au poste de détente, 100 ou 200, c'est-à-dire non compris dans les éléments nécessaires au fonctionnement dudit poste de détente, 100 ou 200, en tant que tel.

Dans des modes de réalisation, tel que celui représenté en figure 2, le fluide en sortie du générateur 115 est fourni en entrée du compresseur 110, par l'intermédiaire d'une canalisation 205.

Dans des modes de réalisation, tels que ceux représentés en figures 1 et 2, le poste, 100 ou 200, le fluide est de l'air par exemple. Ce fluide peut être de tout autre type avantageux en termes de capacité de stockage d'énergie.

Dans des modes de réalisation, tels que ceux représentés en figures 1 et 2, le poste, 100 ou 200, l'échangeur 115 de chaleur est configuré pour être au moins partiellement enterré dans un sol.

Dans des modes de réalisation, tel que celui représenté en figure 3, le poste 300 comporte une pluralité de détendeurs à récupération d'énergie mécanique 105, 145 et/ou une pluralité de compresseurs 110, 150.

Chaque détendeur, 105 ou 145 est mécaniquement associé à un compresseur, respectivement 110 et 150, pour que le mouvement de ce détendeur, lors de la détente du gaz, entraîne l'actionnement de ce compresseur.

Dans des modes de réalisation, tel que celui représenté en figure 3, un premier échangeur 115 de chaleur est positionné entre deux couples de détendeurs 105 et 145 et de compresseurs 110 et 150.

Un deuxième échangeur 155 de chaleur est positionné en aval d'un couple de détendeur 145 et de compresseur 150. Ce deuxième échangeur 155 présente une entrée 170 qui reçoit le flux de gaz sortant du détendeur 105. Une fois ce gaz refroidi, une canalisation 175 amène ce gaz au deuxième détendeur 145. Le gaz détendu sort du poste de détente 300 à la sortie de ce détendeur 145.

Dans des modes de réalisation, tels que celui représenté en figure 3, le poste 300 comporte un échangeur 115 thermique entre un flux de fluide issu d'un compresseur 110 et un flux de gaz fourni audit poste en amont de tout détendeur. Dans le mode de réalisation représenté en figure 3, un échangeur 115, 155 est positionné en amont de chaque couple de détendeur et compresseur.

Réchauffer le gaz avant chaque étage de détente permet que la température du gaz ne descende pas trop bas et évite la formation d'hydrates (c'est-à-dire la sublimation de molécules contenant de l'eau) qui pourraient endommager le détendeur 105 ou 155. De même, refroidir le fluide à chaque étage de compression permet d'éviter que le fluide trop chaud ne détériore certaines pièces du compresseur 150.

Dans des variantes, telles que celles représentées en figures 1 et 2, l'échangeur 115 est positionné en aval de chaque détendeur 105 et/ou de chaque compresseur 110.

## Revendications

1. Poste (100, 200, 300) de détente d'un flux d'un gaz, présentant en entrée une température Tₐ et une pression Pₐ, **caractérisé en ce qu'**il comporte :
- un détendeur à récupération d'énergie mécanique (105) configurée pour abaisser la pression du flux de gaz à une pression P_{b} et à une température T_{b} telles que P_{b} < Pₐ et T_{b} < Tₐ,
- un compresseur (110) d'un flux d'un fluide, présentant en entrée une température T_{c} et une pression P_{c}, le détendeur et le compresseur étant mécaniquement associés pour que le mouvement du détendeur lors de la détente du gaz entraîne l'actionnement du compresseur de sorte que le fluide soit comprimé à une pression P_{d} et à une température T_{d} telles que P_{d} > P_{c} et T_{d} > T_{c} et
- un échangeur (115) de chaleur entre le flux de gaz en sortie ou en entrée du détendeur et le flux du fluide en sortie ou en entrée du compresseur pour réchauffer le gaz et pour refroidir le fluide.

2. Poste (100, 200, 300) de détente selon la revendication 1, qui comporte un arbre commun (160, 165, 430) entre un détendeur et un compresseur.

3. Poste (100, 200, 300) de détente selon l'une des revendications 1 ou 2, qui comporte un piston libre (420, 430, 435) mis en déplacement dans une chambre de détente (425) par le gaz et compressant le fluide dans une chambre de compression (440).

4. Poste (100, 200, 300) de détente selon l'une des revendications 1 à 3, qui comporte un générateur (125) configuré pour générer de l'électricité électrique à partir du fluide en sortie (140) de l'échangeur (115) de chaleur.

5. Poste (100, 200, 300) de détente selon la revendication 4, qui comporte un moyen (130) de stockage d'énergie électrique généré par le générateur, ce moyen de stockage alimentant en énergie électrique au moins un élément dudit poste de détente.

6. Poste (300) de détente selon la revendication 5, qui comporte un échangeur (115) thermique entre un flux de fluide sortant d'un compresseur (110) et un flux de gaz fourni audit poste en amont d'un détendeur (105).

7. Poste (100, 200, 300) de détente selon l'une des revendications 4 à 6, dans lequel l'électricité alimente au moins un élément (135) dudit poste de détente.

8. Poste (200) de détente selon l'une des revendications 4 à 7, dans lequel le fluide en sortie du générateur (125) est fourni en entrée du compresseur (110).

9. Poste (100, 200, 300) de détente selon l'une des revendications 1 à 8, dans lequel le fluide est de l'air.

10. Poste (100, 200, 300) de détente selon l'une des revendications 1 à 9, qui comporte un réservoir (120) de stockage du fluide comprimé refroidi dans l'échangeur (115) de chaleur.

11. Poste (100, 200, 300) de détente selon la revendication 10, qui comporte un générateur (125) configuré pour générer de l'électricité électrique à partir du fluide en sortie (140) du réservoir (120) de stockage de fluide.

12. Poste (100, 200, 300) de détente selon l'une des revendications 1 à 11, dans lequel l'échangeur (115) de chaleur est configuré pour être au moins partiellement enterré dans un sol.

13. Poste (300) de détente selon l'une des revendications 1 à 12, qui comporte une pluralité de détendeurs à récupération d'énergie mécanique (105) et/ou une pluralité de compresseurs (110) étagés.

14. Poste (300) de détente selon la revendication 13, dans lequel l'échangeur (115) de chaleur est positionné entre deux étages de détendeurs (105) et/ou de compresseurs (110).

15. Poste (300) de détente selon l'une des revendications 1 à 14, qui comporte un échangeur thermique (155) entre un flux de fluide issu d'un compresseur (110) et un flux de gaz fourni audit poste.

## Patentansprüche

1. Druckregelstation (100, 200, 300) für einen Gasstrom, die eingangs eine Temperatur Tₐ und einen Druck Pₐ aufweist und folgende Bestandteile umfasst:
- einen mechanischen Druckminderer mit Energierückgewinnung (105), so konfiguriert, dass er den Druck des Gasstroms auf einen Druck P_{b} und eine Temperatur T_{b} wie P_{b} < Pₐ und T_{b} < Tₐ absenkt,
- einen Fluidverdichter (110), der eingangs eine Temperatur T_{c} und einen Druck P_{c} aufweist, wobei der Druckminderer und der Verdichter mechanisch so verbunden sind, dass die Bewegung des Druckminderers während der Gasausdehnung den Verdichter aktiviert, sodass das Fluid auf einen Druck P_{d} und eine Temperatur T_{d} wie P_{d} > P_{c} und T_{d} > T_{c} komprimiert wird, und
- einen Wärmetauscher (115) zwischen dem Gasstrom am Ausgang oder Eingang des Druckminderers und dem Fluidstrom am Ausgang oder Eingang des Verdichters, um das Gas zu erwärmen und das Fluid zu kühlen.

2. Druckregelstation (100, 200, 300) nach Anspruch 1 mit einer gemeinsamen Welle (160, 165, 430) zwischen Druckminderer und Verdichter.

3. Druckregelstation (100, 200, 300) nach einem der Ansprüche 1 oder 2 mit einem freien Kolben (420, 430, 435), der durch das Gas in eine Expansionskammer (425) bewegt wird und das Fluid in einer Kompressionskammer (440) verdichtet.

4. Druckregelstation (100, 200, 300) nach einem der Ansprüche 1 bis 3 mit einem Generator (125), so konfiguriert, dass er elektrischen Strom aus dem Fluid am Ausgang (140) des Wärmetauschers (115) erzeugt.

5. Druckregelstation (100, 200, 300) nach Anspruch 4 mit einem Medium (130) zur Speicherung der vom Generator erzeugten elektrischen Energie, wobei dieses Speichermedium mindestens ein Element der Druckregelstation mit elektrischer Energie versorgt.

6. Druckregelstation (300) nach Anspruch 5 mit einem Wärmetauscher (115) zwischen einem Fluidstrom aus einem Kompressor (110) und einem Gasstrom, der an diese, einem Druckminderer (105) vorgelagerte Station geliefert wird.

7. Druckregelstation (100, 200, 300) nach einem der Ansprüche 4 bis 6, wobei die Elektrizität mindestens ein Element (135) der Druckregelstation versorgt.

8. Druckregelstation (200) nach einem der Ansprüche 4 bis 7, wobei das Fluid vom Ausgang des Generators (125) zum Eingang des Verdichters (110) geliefert wird.

9. Druckregelstation (100, 200, 300) nach einem der Ansprüche 1 bis 8, wobei es sich beim Fluid um Luft handelt.

10. Druckregelstation (100, 200, 300) nach einem der Ansprüche 1 bis 9 mit einem Behälter (120) zur Speicherung des gekühlten verdichteten Fluids im Wärmetauscher (115).

11. Druckregelstation (100, 200, 300) nach Anspruch 10 mit einem Generator (125), so konfiguriert, dass er elektrischen Strom aus dem Fluid (140) am Ausgang des Fluidspeichertanks (120) erzeugt.

12. Druckregelstation (100, 200, 300) nach einem der Ansprüche 1 bis 11, wobei der Wärmetauscher (115) so konfiguriert ist, dass er zumindest teilweise in den Boden eingelassen ist.

13. Druckregelstation (300) nach einem der Ansprüche 1 bis 12 mit mehreren mechanischen Druckminderern mit Energierückgewinnung (105) und/oder mehreren mehrstufigen Verdichtern (110).

14. Druckregelstation (300) nach Anspruch 13, wobei sich der Wärmetauscher (115) zwischen zwei Druckminderer- (105) und/oder Verdichterstufen (110) befindet.

15. Druckregelstation (300) nach einem der Ansprüche 1 bis 14 mit einem Wärmetauscher (155) zwischen einem Fluidstrom aus einem Verdichter (110) und einem Gasstrom, der an diese Station geliefert wird.

## Claims

1. Expansion station (100, 200, 300) for a flow of a gas, having on input a temperature Tₐ and a pressure Pₐ, **characterised in that** it comprises:
- a pressure reducer with mechanical energy recovery (105) configured to lower the pressure of the gas flow to a pressure P_{b} and a temperature T_{b}, such that P_{b} < Pₐ and T_{b} < Tₐ;
- a compressor (110) of a flow of a fluid, having on input a temperature T_{c} and a pressure P_{c}, the pressure reducer and the compressor being mechanically associated so that the movement of the pressure reducer during the expansion of the gas causes the activation of the compressor such that the fluid is compressed to a pressure P_{d} and a temperature T_{d}, such that P_{d} > P_{c} and T_{d} > T_{c}; and
- a heat exchanger (115) between the gas flow on output from or input to the pressure reducer and the fluid flow on output from or input to the compressor, for heating the gas and cooling the fluid.

2. Expansion station (100, 200, 300) according to claim 1, which comprises a common shaft (160, 165, 430) between a pressure reducer and a compressor.

3. Expansion station (100, 200, 300) according to one of claims 1 or 2, which comprises a free piston (420, 430, 435) set in motion in an expansion chamber (425) by the gas and compressing the fluid in a compression chamber (440).

4. Expansion station (100, 200, 300) according to one of claims 1 to 3, which comprises a generator (125) configured to generate electrical energy from the fluid on output (140) from the heat exchanger (115).

5. Expansion station (100, 200, 300) according to claim 4, which comprises a means (130) for storing electrical energy generated by the generator, this storage means supplying electrical energy to at least one element of said expansion station.

6. Expansion station (300) according to claim 5, which comprises a heat exchanger (115) between a fluid flow output from a compressor (110) and a gas flow supplied to said station upstream of a pressure reducer (105).

7. Expansion station (100, 200, 300) according to one of claims 4 to 6, wherein the electricity powers at least one element (135) of said expansion station.

8. Expansion station (200) according to one of claims 4 to 7, wherein the fluid output from the generator (125) is provided for input to the compressor (110).

9. Expansion station (100, 200, 300) according to one of claims 1 to 8, wherein the fluid is air.

10. Expansion station (100, 200, 300) according to one of claims 1 to 9, which comprises a storage tank (120) for the compressed fluid cooled in the heat exchanger (115).

11. Expansion station (100, 200, 300) according to claim 10, which comprises a generator (125) configured to generate electrical energy from the fluid on output (140) from the fluid storage tank (120).

12. Expansion station (100, 200, 300) according to one of claims 1 to 11, wherein the heat exchanger (115) is configured to be at least partially embedded in a floor.

13. Expansion station (300) according to one of claims 1 to 12, which comprises a plurality of staged pressure reducers with mechanical energy recovery (105) and/or a plurality of staged compressors (110).

14. Expansion station (300) according to claim 13, wherein the heat exchanger (115) is positioned between two stages of pressure reducers (105) and/or of compressors (110).

15. Expansion station (300) according to one of claims 1 to 14, which comprises a heat exchanger (155) between a fluid flow output from a compressor (110) and a gas flow supplied to said station.
